# EUROPEAN PATENT SPECIFICATION

(11) **EP 2 536 793 B1**
(45) Date of publication and mention of the grant of the patent: **10.06.2015**
(21) Application number: 11708557.1
(22) Date of filing: 11.02.2011
(51) Int. Cl.: C09D 5/00

(54) **TITANIUM DIOXIDE**
TITANDIOXID
DIOXYDE DE TITANE

(30) Priority: 17.02.2010 GB 201002703
(43) Date of publication of application: 26.12.2012
(73) Proprietor: Tioxide Europe Limited, Stockton-On-Tees, TS22 5FD (GB)
(72) Inventor: EDWARDS, John, L, Durham DH1 4AP (GB); ROBB, John, Stockton-on-Tees Durham TS18 5EG (GB); TEMPERLEY, John, Stockton-on-Tees Durham TS21 2JD (GB); JONES, Anthony, G., Stockton-on-Tees Durham TS21 2BY (GB)
(74) Representative: Johnson, Yvonne Catherine
(86) International application number: PCT/GB2011/050268
(87) International publication number: WO 2011/101658

(56) References cited:
- EP-A1- 1 930 297
- EP-A2- 1 321 432
- WO-A1-02/057374
- DE-A1-102005 021 087
- JP-A- 2003 182 001
- JP-A- 2005 060 522
- JP-A- 2006 044 155

## Description

### FIELD OF THE INVENTION

This disclosure, in general, relates to UV light attenuative compositions containing elevated amounts of effect coated particulate material and the use of this material to provide UV light protection to various solar radiation exposed substrates.

### BACKGROUND

It is well known that ultraviolet (UV) light (∼10 nm - 400 nm) from the sun promotes skin damage. But UV light can also damage many other sun-exposed items such as paints, plastics, coatings and rubber, which can cause the items to become discoloured, fade, and/or crack. Substantial damage can even cause the item to disintegrate. If such UV light damage could be attenuated, the lifetime and/or durability of these sun-exposed items would increase. This is a very desirable feature for colour exterior coatings and plastics since an increased lifetime can lead to decreased replacement costs.

Present means for attenuating the effects of UV light on sun-exposed exterior surfaces include the use of UV light absorbers, such as carbon black, or light stabilizers such as hindered amines. Organic UV light absorbers can also be used to inhibit photo-degradation in paints and plastics, but because these absorbers act sacrificially, they offer limited protection. Certain forms of titanium dioxide, such as ultrafine titanium dioxide (average particle size < 100 nm) and conventional titanium dioxide (average particle size of 0.1 microns - 0.4 microns) have been used to absorb UV light. However, not all of the UV light is beneficially absorbed. For example, some of the UV light absorbed by such titanium dioxide excites electrons to a higher energy level leaving behind positive "holes". The electrons and holes are mobile, and should they reach the surface of the titanium dioxide particles, can form free radicals which can then react to decompose organic matter. While this type of photocatalytic effect may be desirable in some applications, it is not in others, such as in applications where a sun-exposed surface or item would benefit from a long lifetime. Moreover, conventional titanium dioxide also confers whitening which is often undesirable in many applications, such as in coloured compositions, varnishes and where glare is an issue.

Accordingly, there is a need for a material that may be used to increase the UV light protective capability of a sun-exposed item without also increasing the UV light activated photocatalytic effects described above.

### SUMMARY

The present invention provides a composition for imparting UV light protective capability and includes an effect coated particulate material dispersed in a medium such that the concentration of the effect coated particulate in the composition is at an elevated condition as compared to state of the art UV light protective compositions. Where reference is made to an effect coated particulate material this means that the particulate material is coated with one or more inorganic pigment coating that may be used to impart effects.

Specifically, the invention as claimed provides, in one aspect, a composition imparting UV protective capability, the composition comprising: a coated particulate material having a substantially rutile crystal habit and an average particle size greater than or equal to about 0.5 µm, and a medium, wherein the medium is a component or combination of components within which the coated particulate material can be dispersed, wherein the particulate material is dispersed in the medium at a concentration that is within a range of from about 1% by volume to about 40% by volume, based on the total volume of composition, wherein the particulate material is selected from titanium dioxide, doped titanium dioxide and a mixture thereof, and wherein the particulate material is coated with one or more inorganic pigment coating that may be used to impart effects.

The composition may be coloured or non-coloured and applied onto one or more surfaces of a substrate to provide UV light protection without also increasing UV light activated photocatalytic effects which are generally observed.

The composition may be used in a variety of applications, such as in paint, a varnish, an ink or coating, which can be applied to one or more surfaces of a variety of materials or substrates exposed to solar radiation to attenuate the effects of UV light. The composition may also be a stand alone composition from which an article can be formed to attenuate the effects of any UV light which the formed article may be exposed.

Specifically, the invention as claimed provides, in another aspect, the use of the composition of the present invention in a paint, ink, varnish or coating or as a composition from which an article can be formed. In another aspect, the claimed invention provides a method of attenuating the effects of UV light on a substrate exposed to solar radiation, where the method comprises applying the composition of the present invention to a surface of the substrate. In another aspect, the claimed invention provides a substrate coated with, or formed by, the composition of the present invention.

In another aspect, the claimed invention provides the use of the composition of the present invention to attenuate the effects of UV light on a substrate exposed to solar radiation.

### BRIEF DESCRIPTION OF THE DRAWINGS

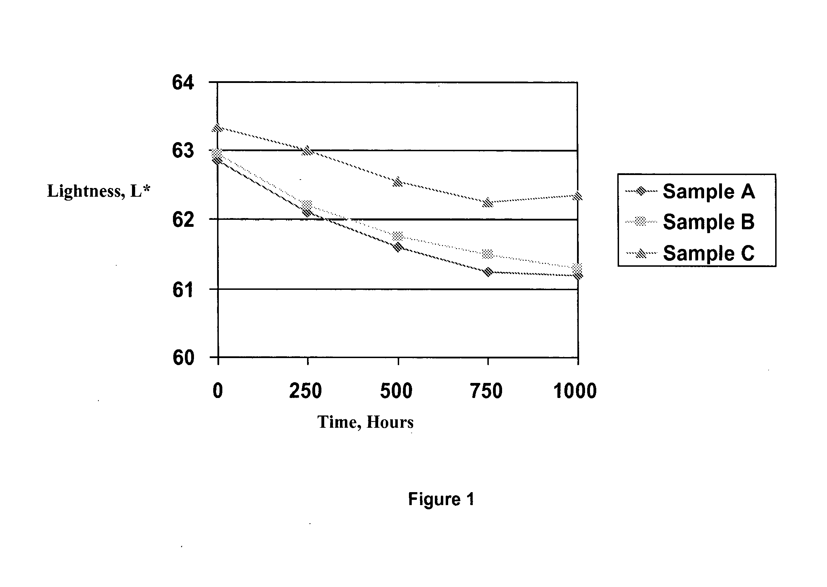

Figure 1 depicts lightness values for painted panels prior to and after UV light exposure over a certain period of time.

### DETAILED DESCRIPTION

In the following detailed description of embodiments, reference is made to the accompanying drawings that form a part hereof, and that show, by way of illustration specific embodiments in which the invention may be practised. Other embodiments may be utilized and changes may be made without departing from the scope of the present invention. The scope of the invention is as set out in the claims.

The present disclosure, in general, relates to UV light attenuative compositions containing elevated amounts of an effect coated particulate material. In particular, the present disclosure provides for the use of effect coated particulate material in compositions at volumes higher than 120%-500% than those previously known using conventional particulate material. The use of such high levels of particulate material in compositions is facilitated by low visible scattering and low medium demand and allows materials or substrates coated with or made from the compositions to exhibit improved durability/longevity to UV light exposure.

In addition, although known ultrafine or nano materials, such as titanium dioxide (average particle size < 100 nm), can absorb UV light efficiently, they are notoriously photoactive, despite treatment with high levels (10 wt % - 50 wt %) of inorganic coatings. It is also difficult to incorporate such ultrafine materials into compositions since they tend to agglomerate and thus clarity of the compositions is diminished. In comparison, it has been surprisingly found that the effect coated particulate material of the present invention is relatively photo-inert even when treated with low levels of inorganic coatings and can be easily incorporated into compositions to provide an advantageous balance of low pastellisation, low tinting reduction and reduced photo-activity properties.

Thus, in one aspect, the present invention as claimed provides a composition imparting UV light protective capabilities which includes a coated particulate material having a substantially rutile crystal habit and an average particle size of greater than or equal to 0.5 µm, and a medium, wherein the particulate material is dispersed in the medium such that the concentration of the coated particulate material is within a range of about 1% by volume to about 40% by volume, based on the total volume of the composition. The medium is a component or combination of components within which the coated particulate material can be dispersed. The particulate material is selected from titanium dioxide, doped titanium dioxide and a mixture thereof. The particulate material is coated with one or more inorganic pigment coating that may be used to impart effects.

As noted above, in the claimed invention, the particulate material is selected from titanium dioxide, doped titanium dioxide and a mixture thereof. This particulate material has an effect coating, in other words the particulate material is coated with one or more inorganic pigment coating that may be used to impart effects. Examples of such coatings include a dense silica coating, an alumina coating, a zirconia coating or a combination thereof

In one embodiment the titanium dioxide useful herein is titanium dioxide having an average particle size greater than or equal to about 0.5 µm. In other embodiments the average particle size of the titanium dioxide may be greater then or equal to about 0.7 µm, or greater than or equal to about 1.0 µm, or greater than or equal to about 1.5 µm or greater than or equal to about 1.8 µm. In a preferred embodiment, the titanium dioxide has an average particle size greater than or equal to about 0.5 µm and less than or equal to about 2 µm, more preferably greater than or equal to about 0.7 µm and less than or equal to about 1.8 µm, and even more preferably greater than or equal to about 1.0 µm and less than or equal to about 1.5 µm. In another embodiment, the titanium dioxide has an average particle size of about 1.1 µm ± 0.3 µm.

Because of its high refractive index, the titanium dioxide is also substantially in a rutile crystal habit. Thus, according to another embodiment, greater than 90% by weight of the titanium dioxide, preferably greater than 95% by weight of the titanium dioxide, and even more preferably greater than 99% by weight of the titanium dioxide, based on the total weight of the particulate material, is in the rutile crystal habit. The percent of titanium dioxide in the rutile crystal habit may be determined by any known method, for example, by measuring X-ray diffraction patterns. In still other embodiments, the particulate material may further contain titanium dioxide in an anatase crystal form.

As one skilled in the art is aware, crystal size is distinct from particle size. Crystal size relates to the size of the fundamental crystals which make up the particulate material. These crystals may then aggregate to some degree to form larger particles. For example, conventional titanium dioxide in a rutile crystal form has a crystal size of about 0.17 µm - 0.29 µm and a particle size of about 0.25 µm - 0.40 µm while conventional titanium dioxide in an anatase crystal form has a crystal size of about 0.10 µm - 0.25 µm and a particle size of about 0.20 µm - 0.40 µm. The particle size is thus affected by factors such as the crystal size as well as milling techniques used during production, such as dry, wet or incorporative milling. Accordingly, in some embodiments, the average particle size of the titanium dioxide may be smaller or larger than the crystal size. Preferably the average particle size of the titanium dioxide is about equal to the crystal size. In one embodiment, the average particle size is about equal to the average crystal size, for example, the ratio of the average particle size to the average crystal size ratio is less than 1.4.

The average crystal size and average particle size of the titanium dioxide may be determined by methods well known to those skilled in the art. For example, the average crystal size may be determined by transmission electron microscopy on a rubbed out sample with image analysis of the resulting photograph. The results may further be validated by reference using latex NANOSHPHERE™ Size Standards (available from Thermo Scientific). A method which may be used for determining the average particle size of the titanium dioxide is X-ray sedimentation techniques.

According to another embodiment, the particulate material is a doped titanium dioxide. As used herein, "doped titanium dioxide" refers to the titanium dioxide of the present disclosure but further including one or more dopants which have been incorporated during preparation of the titanium dioxide. The dopants, which may be incorporated by known processes, may include, but are not limited to, calcium, magnesium, sodium, nickel, niobium, cobalt, aluminum, antimony, phosphorus, chromium, vanadium, manganese, cesium, or combinations thereof. In a particular embodiment, the titanium oxide may be doped with chromium, manganese, and/or vanadium, which can act as recombination centres for holes and electrons. One will be aware that with increased recombination comes decreased UV stimulated photocatalytic activity.

The dopant may be incorporated in an amount of no more than 30% by weight, preferably no more than 15% by weight, and more preferably no more than 5% by weight, relative to the total weight of the titanium dioxide. For example the dopant may be incorporated in an amount of from 0.1 to 30% by weight, or 0.5 to 15% by weight, or 1 to 5% by weight, relative to the total weight of the titanium dioxide. Additionally, such doped titanium dioxide may further be recognized by being substantially in a rutile crystal habit. Thus, according to another embodiment, greater than 90% by weight of the doped titanium dioxide, preferably greater than 95% by weight of the doped titanium dioxide, and even more preferably greater than 99% by weight of the doped titanium dioxide, based on the total weight of the particulate material, is in the rutile habit. In other embodiments, the particulate material may further contain doped titanium in an anatase crystal form.

In preferred embodiments the particulate material includes at least about 70% by weight, preferably at least about 80% by weight, and even more preferably at least about 90% by weight of titanium dioxide, based on the total weight of particulate material. In other embodiments, the particulate material includes at least about 95% by weight, preferably at least about 99% by weight, and even more preferably at least about 99.5% by weight of titanium dioxide, based on the total weight of particulate material.

To produce embodiments of the titanium dioxide, natural ores such as ilmenite and mineral rutile, enriched ores such as titanium slag and beneficiated ilmenite, or both may be used as the starting raw material. These ores may be processed by any suitable means, such as the sulphate process or the chloride process to produce an embodiment of the titanium dioxide.

For example, in an embodiment employing the basic sulphate process, the ore or titaniferous feedstock is reacted with sulphuric acid to form a porous cake. The cake is then dissolved in water and/or weak acid to produce a solution of a titanium sulphate. The titanium sulphate solution is then hydrolyzed to form a precipitate of hydrous titanium dioxide. In an embodiment, hydrolysis may occur in the presence of anatase nuclei (e.g. the "Mecklenburg" process), but embodiments are not limited thereto. The precipitate may be filtered, washed, and/or leached to produce a pulp.

In some embodiments, the pulp may be supplemented with nuclei and/or other materials. For example, growth moderators, growth promoters, and/or seed material that are known in the art may be added to the pulp. In some embodiments, growth moderators are absent, growth promoters are used at increased levels, and/or rutile seed materials are reduced.

One type of nuclei that may be added to the pulp is Blumenfeld nuclei. In a particular embodiment, 0.1 to 0.5% by weight (wt/wt) Blumenfeld nuclei may be added to the pulp. In a particular embodiment, 0.3% by weight (wt/wt) Blumenfeld nuclei may be added to the pulp. Generally, to form Blumenfeld nuclei a portion of the precipitated hydrous titanium dioxide is digested in concentrated sodium hydroxide solution to produce sodium titanate. The sodium titanate is then subsequently reacted with hydrochloric acid to produce the Blumenfeld nuclei.

In embodiments where the titanium dioxide is to be doped, one or more suitable dopants may be added to the pulp. Typically, dopants are added to the pulp in the form of a salt, although such embodiments are not so limiting. For example, if the dopant is manganese, manganese sulphate may be added to the pulp. In a particular embodiment, manganese sulphate may be added at a concentration of < 0.2% by weight (wt/wt). For example, manganese sulphate may be added at a concentration of from 0.01 to 0.2% by weight (wt/wt). In other embodiments, Al₂O₃ and K₂O may be added to the pulp. For example, from 0.01 to 0.5% by weight of Al₂O₃ (wt/wt) and 0.01 to 0.5% by weight of K₂O (wt/wt) may be added to the pulp. In a particular embodiment, 0.05% by weight of Al₂O₃ (wt/wt) and 0.2% by weight of K₂O (wt/wt) may be added to the pulp, and in another particular embodiment, 0.2% by weight K₂O (wt/wt) and 0.2% by weight Al₂O₃ (wt/wt) may be added to the pulp. Although dopants may be added to the pulp, in other embodiments they may come through from the ore.

After any desired additions are made to the pulp, the pulp can be calcined. In an embodiment, calcination takes place in an internally fired rotary kiln. Generally, the pulp moves slowly through the kiln under gravity. While in the kiln, crystals grow, and if desired are converted to rutile. In an embodiment, the calcination temperature may be higher than generally used, such as 900°C or higher, or 1000°C or higher. Furthermore, the duration for calcination may be longer, such as 5 hours or more. In a particular embodiment (e.g., using the Blumenfeld process), the temperature of the rotary kiln is ramped up to around 1000°C at a rate of 1°C/minute, where the exact temperature is selected to ensure an anatase level of between 0.1-3% by weight (wt/wt). In another particular embodiment (e.g. using the Mecklenburg process), the temperature of the kiln is increased at a rate of 1°C/min to 1030°C. Once 1030°C is reached, the temperature may then be held at 1030°C for 30 minutes. After calcination, the titanium dioxide is passed to a cooler and allowed to cool.

Although the exemplary process described above relates generally to the sulphate process, the production of the titanium dioxide is not limited thereto-it may equally be produced by the fluoride process, hydrothermal processes, aerosol processes, leaching processes, or chloride process.

Regardless of the method of production, the resultant titanium dioxide (or doped titanium dioxide) is further processed by depositing an effects coating material onto the particles surface. With such coating, the titanium dioxide exhibits increased UV light protective capability as compared to conventional pigmentary crystal size titanium dioxide. It also exhibits reduced photocatalytic activity and improved dispersibilty.

In general, it is often desirable to have titanium dioxide milled since the optical performance depends on reducing the average particle size so that it tends towards the crystal size. One will appreciate that wet milling (such as sand or bead milling) is most effective and that subsequently, the most effective way of separating the titanium dioxide and aqueous medium involves coating the particles with aluminium oxyhydroxide. Clearly, the titanium dioxide must be dispersed prior to milling. A crude 'alumina' coating serves to render the titanium dioxide flocculent at neutral pH, facilitating filtration and washing prior to drying.

However, one will also appreciate that inorganic pigment coatings may be used to impart effects. Such effects include dispersibilty, photocatalytic inertness, colour stability and photostability. In the present claimed invention the particulate material is coated with one or more inorganic pigment coating that may be used to impart effects, which may be referred to herein as "effect coating materials".

Effect coating materials may include, but are not limited to; silica, dense amorphous silica, zirconia, aluminium phosphate, titania, tin, antimony, manganese and cerium. Note that while the crude alumina coating described above is practised on all wet-milled pigments, to assist processing of the material, effect coatings are added only where an application effect is desired in the coated particles.

Particles of the titanium dioxide (or doped titanium dioxide) may be coated with any suitable amount of effect coating material. The particles may be, for example, coated with the effect coating material at a level of up to about 7% by weight, such as from about 0.1% to about 7% by weight, or such as from about 0.2% to about 7% by weight, relative to the total weight of titanium dioxide (or doped titanium dioxide).

If coloured oxide materials such as cerium oxide are included in the coating material, the level of effect coating material coated on the particles may be less than the aforementioned amounts, such as, but not limited to, up to about 0.4% by weight or less, for example, up to about 0.3% by weight or less, or up to about 0.2% by weight or less, or up to about 0.1% by weight relative to the total weight titanium dioxide (or doped titanium dioxide). For example, the amount may be from 0.01 to 0.4% by weight or from 0.02 to 0.3% by weight or from 0.05 to 0.2% by weight.

Embodiments are not limited to a single effect coating material. Thus, two or more effect coating materials may be used to coat the particles. These additional coatings may be applied either simultaneously in a single operation or in succession. If applied simultaneously, different effect coating materials may be used in combination to produce a single layer. If applied successively, different effect coating materials may be used separately to produce two or more layers, each layer having a different composition. Thus, in one embodiment, the particles are coated with silica, such as dense silica, to produce a layer, and also with zirconia to produce another layer.

In another embodiment, to produce the coatings described herein, the titanium dioxide particles (or doped titanium dioxide particles) may be milled prior to coating (for e.g. after calcination and cooling). In some embodiments, the particles may be dry milled, for example with a Raymond mill, or they may be wet milled, for example with a fine media mill or sandmill, or both. Generally, to wet mill, the particles are dispersed in water and ground into sub micrometer sized particles to form an aqueous slurry.

In another embodiment, the above described particles may be dry milled using a Raymond mill and then wet milled in a fine media mill containing Ottawa sand. During wet milling, the particles may be slurried to 350 grams/litre and milled for 30 minutes. After wet milling, the sand may be separated from the slurry, such as by settling or any other suitable means to form the aqueous slurry.

Particles may be coated by adding a suitable effect coating material to the aqueous slurry prior to or during a pH adjustment to effect precipitation. For example, the effect coating material may be added to the aqueous slurry first, followed by pH adjustment; alternatively, the pH of the aqueous slurry may be adjusted while the effect coating material is being added to the aqueous slurry.

Suitable effect coating materials may include, but are not limited to, salts such as zirconium sulphate, phosphoric acid, and sodium silicate as non-limiting examples. In the case of zirconium sulphate, zirconyl oxy hydroxide may be precipitated onto the surface of the particles to coat the particles; in the case of sodium silicate, silica may be precipitated onto the surface of the particles to coat the particles.

In one exemplary embodiment, the aqueous slurry comprising particles of titanium dioxide (or doped titanium dioxide) is introduced into a tank for stirring. The aqueous slurry's temperature may then be adjusted to 75°C and its pH adjusted to 10.5. The effect coating material may then be introduced into the stirred tank in an amount sufficient to produce the desired coating. For example, to produce a 1% by weight dense silica coating, 1% silica (%wt/wt on titanium dioxide) is added to the stirred tank over 30 minutes and mixed for 30 minutes. To produce a 3% by weight dense silica coating, 3% silica (%wt/wt on titanium dioxide) is added in the same manner. In an embodiment, silica may be added to the stirred tank in the form of the coating material sodium silicate.

To precipitate a dense silica coating (as described in the forgoing paragraph) onto the particles, the pH may be adjusted by adding sulphuric acid to the stirred tank. In a particular embodiment, sulphuric acid may be added over 60 minutes to bring the pH to 8.8 and then over 35 minutes to further adjust the pH to 1.3.

One practiced in the art will appreciate that having coated the particles of titanium dioxide or doped titanium dioxide coated with dense silica, they may then be coated with an alumina coating to assist onward processing such as filtration. For example, in an embodiment these particles may be further coated with 0.6% by weight alumina by adding, to the stirred tank, caustic sodium aluminate over 25 minutes to bring the pH to 10.25, at which point the contents of the tank are mixed for 20 minutes. Thereafter, sulphuric acid can be added to the tank to adjust the pH to 6.5.

Once coating has been completed, the effect coated titanium dioxide or doped titanium dioxide may be washed and dried before grinding in a micronizer or fluid energy mill. Generally, this grinding step separates particles that have been stuck together during the coating and/or drying procedures. Furthermore, during this final grinding step the effect coated material may be treated with a surface treatment if desired according to the end-use application. Surface treatments include, without limitation, organic surface treatments such as treatment with polyols, amines, and silicone derivatives. Organic surface treatments may improve the dispersibilty of the effect coated titanium dioxide.

In an embodiment, the thus obtained effect coated titanium dioxide may be treated to selectively remove particular size fractions. For example, particles that are greater than or equal to 5 µm in diameter may be removed; alternatively, particles that are greater than or equal to 3 µm in diameter may be removed. These two sizes are exemplary and embodiments are not limited to removing just these particle sizes. In some embodiments, selective removal may be performed by centrifugation.

Once obtained, the effect coated particulate material is dispersed within a medium. The medium is any component or combination of components within which the effect coated particulate material can be dispersed, and includes, but is not limited to, a resin, carrier, binder or a mixture thereof.

Embodiments of the effect coated titanium dioxide provide a lower tint reduction and are also relatively transparent. Such lower tint reduction is beneficial in coloured systems where a lightening of the colour is not desirable. In comparison, pigmentary titanium dioxide has a higher tint reduction which increases the lightness of colour while carbon black has the opposite effect of reducing the lightness of a colour. While nano titanium dioxide is relatively clear, it is notoriously difficult to disperse properly resulting in variability of pastellisation. Thus, use of pigmentary titanium dioxide, nano titanium dioxide, or carbon black limits one's ability to produce durable bright, vibrant colours.

By way of background, lightness is a colour property or a dimension of a colour space that reflects the brightness perception of a colour. One way to express this property/colour space is by lightness L*. L* is the result of the CIELAB formula for defining colour space. Higher values of L* are closer to white and lower values of L* are closer to black. An L* of about 50 is midway between black and white, and indicates a mid grey coloration.

To form colours, the composition containing the effect coated particulate material may be blended with one or more coloured pigments. Such coloured pigment or pigments may be any coloured pigment(s) that enables creation of a desired colour. Although coloured pigments and the resulting colours are not restricted, it is preferred that the coloured pigments be selected to minimise absorbance of UV light.

According to one embodiment, the coloured pigment is selected from one or more inorganic colorants, one or more organic colorants, and a mixture thereof. Examples of inorganic colorants include, but are not limited to, coated or uncoated metal oxide pigments such as bismuth, chrome, cobalt, gallium, indium, iron, lanthanum, manganese, molybdenum, neodymium, nickel, niobium and vanadium pigments, composite metal oxide system pigments, and complex inorganic colour pigments, such as those described in U.S. Pat. Nos, 6,174,360, 6,416,868 and 6,541,112, the entire contents of which are hereby incorporated by reference. Thus it is possible that a yellow embodiment and a white embodiment might for example be combined to give a desired tone with enhanced desirable inhibition of photocatalysis.

Examples of organic pigments include, but are not limited to, copper phthalocyanine, dissimilar metal (e.g. nickel, cobalt, iron, etc.) phthalocyanine, non-metallic phthalocyanine, chlorinated phthalocyanine, chlorinated-brominated phthalocyanine, brominated phthalocyanine, anthraquinone, quinacridone system pigment, diketopyrrolopyrrole system pigment, perylene system pigment, monazo system pigment, diazo system pigment, condensed azo system pigment, metal complex system pigment, quinophthalone system pigment, indanthrene blue pigment, dioxadene violet pigment, benzimidazolone system pigment, perinone system pigment, indigo/thioindigo system pigment, dioxazine system pigment, isoindolinone system pigment, isoindoline system pigment, azomethine or azomethine-azo system pigment.

The composition may optionally include one or more customary additives. Additives suitable for use include, but are not limited to, thickeners, stabilizers, emulsifiers, texturizers, adhesion promoters, UV stabilizers, de-glossing agents, dispersants, antifoaming agents, wetting agents, coalescing agents, spacer particles and biocides/fungicides.

As discussed above, it has been surprisingly found that elevated levels of the effect coated particulate material in compositions provides for excellent UV protection when such compositions are applied to various materials or substrates or used in forming articles exposed to solar radiation. In comparison, if the levels of pigmentary and/or nano titanium dioxide are increased numerous problems can result. For example, increasing the level of pigmentary titanium dioxide lightens colour so its concentrations cannot be significantly increased without changing the desired colour. And increasing the level of nano titanium dioxide increases the potential for UV stimulated photocatalytic activity so its concentrations cannot be significantly increased.

Furthermore, it has been surprisingly found that a coloured composition can be formulated for a wide range of colours even when such composition contains an elevated level of the effect coated particulate material. For instance, according to an embodiment, a colour is provided by determining which coloured pigment(s) to use and in what proportion or ratio they should be used to produce a particular colour. The UV protective capability, however, is dependent on the concentration of the effect coated particulate material in the composition; the higher its concentration, the greater the UV protective capability. In some embodiments, the concentration of the effect coated particulate material in the composition may be greater than or equal to about 1% by volume and less than or equal to about 40% by volume, relative to the total volume of the composition, and in other embodiments the concentration of the effect coated particulate material in the composition may be greater than or equal to about 30% by volume and less than or equal to about 40% by volume, such as between about 33%-37% by volume, relative to the total volume of the composition.

In exemplary embodiments, such as when the composition is used in a plastic, the concentration of the effect coated particulate material may be greater than or equal to about 1% by volume relative to the total volume of the composition. In another exemplary embodiment, such as when the composition is used in paint or a coating, the concentration of effect coated particulate material may be greater than or equal to about 5% by volume relative to the total volume of the composition.

To retain the same position in colour space, the ratio of coloured pigments in the composition is increased in proportion with embodiments of the effect coated particulate material. For example, the same position in colour space may be achieved by doubling the concentration of colored pigmentary components in a medium and doubling the embodiment of the effect coated particulate material. In this way, a wide range of coloured systems can be created with improved UV protective capability by using elevated concentrations of the effect coated particulate material having very low photocatalytic tendencies.

Although coloured compositions have been discussed, embodiments of the present invention are not limited thereto. For instance, the effect coated particulate material may be used at elevated concentrations in a non-coloured composition, a white composition, or in a clear composition, such as in a varnish. For example, in one embodiment, the effect coated particulate material may be used in elevated concentrations in a wood varnish, and due to its low tint reduction, allow wood grain to be observed after its application to one or more surfaces of a wood object.

Accordingly, the composition containing the effect coated particulate material may be used in any type of application and applied to any one or more surfaces of a material or substrate. For instance, the composition may be used in paint, a varnish, an ink, a plastic, a coating, a rubber, etc. to name just a few. Furthermore, potential materials substrates and their surfaces to which the compositions may be applied to (by any known means) are unlimited and include any material, substrate or surface that may be exposed to UV light, including, but not limited to, a building surface, an automobile, a water tower, a portable container, a road surface, a textile, an aircraft, a boat, a ship, other types of water craft, a window profile, siding, a sign, furniture, fencing, decking, and railings. The composition may also be used as a stand alone composition from which an article can be formed. As such, UV light attenuation provided by embodiments of the present disclosure may increase the UV light protective capability and lifetime of these types of UV light exposed materials, substrates, surfaces and articles.

The present invention will be further illustrated by a consideration of the following examples, which are intended to be exemplary of the invention.

### Example 1

Three samples of tinted grey paints were tested for durability. Samples A and B were comparative samples whereas Sample C was an inventive sample. Each comparative sample included TR60® titanium dioxide pigment (available from Huntsman Tioxide Americas Inc.) which is a superdurable, predominantly rutile pigment having a dense silica and alumina coating and an average particle size of 0.36 µm. Sample C included titanium dioxide having an average particle size of 0.87 µm, predominantly rutile in crystal structure and having a dense silica and alumina coating.

The samples were prepared by first formulating a black tinter concentrate. Referring to Table 1 below, the black tinter concentrate included, in the percent by weight provided below, a hydroxy functional acrylic resin, solvent, carbon black tint and a wetting and dispersing additive. The tint concentrate was then milled with steel ballotini.

**Table 1. Black tinter concentrate make-up.**

| **Tinter Concentrate Components** | **% By Weight** |
|---|---|
| 60% Acrylic Resin (40% solvent) | 78 |
| Solvent | 4 |
| Wetting & Dispersing Additive | 9 |
| Carbon Black Tint | 9 |

After milling, the black tinter concentrate was then used to make a black resin solution by vigorously mixing 6.9 grams (g) of the black tinter concentrate with 90.4 g of the same acrylic resin.

Thereafter, a millbase for each sample was prepared. Referring to Table 2, an amount of titanium dioxide was added to 7.5 g of the black resin solution to create the millbase. The amounts of TR60® pigment in samples A and B were varied in order to match the lightness for sample C. Each sample millbase was vigorously mixed for 30 seconds. Thereafter, 13 g of the black resin solution was added to the mixed millbases and then milled for 2 minutes.

**Table 2. Colored resin solution make-up.**

| **Millbase Formulations** | **Sample A** | **Sample B** | **Sample C** |
|---|---|---|---|
| Black Resin (1^{st} addition) (g) | 7.5 | 7.5 | 7.5 |
| TR60® pigment (g) | 8.0 | 8.32 | - |
| Titanium dioxide 0.87 µm (g) | - | - | 18.9 |
| Black resin (2^{nd} addition) (g) | 13 | 13 | 13 |
| Volume % Titanium dioxide (volume of TiO2/total volume) | 16 | 17 | 31 |

The resultant paints were each drawn down over a separate aluminium panel using a number 6 wire wound applicator to give a wet film thickness of about 60 µm. The solvents were allowed to evaporate and the panels were stoved at 105 °C for 30 minutes.

To replicate the natural aging process, the test panels were exposed for a total of 1000 hours in an Atlas Ci65a WEATHER-O-METER® instrument, from Atlas Material Testing Technology LLC, Chicago, IL.

Referring to Figure 1, an initial panel lightness was measured for each sample. Lightness measurements were performed by a Minolta CM-3600d Xenon flash spectra photometer. Each test panel's lightness value (L*) before UV light exposure was close to L* = 63. Thereafter, the test panels were exposed at UV light, with lightness measurements taken every 250 hours.

To test for panel lightness after exposure, the panels were washed with a solution of mild detergent in water then dried at room temperature for two hours, prior to reading by a spectrophotometer. Thereafter, the panels were returned to the weathering machine for further exposure.

As shown in Figure 1, the lightness values decreased for all three test panels after 250 hours of exposure. The lightness values for test panels painted with comparative samples A and B, however, decreased more than the panel painted with inventive sample C. This result can also be seen again at 500 hours, 750 hours and 1000 hours. For instance, at 1000 hours the difference between the lightness values for panels painted with samples A and C is 1.15, while the difference between the lightness values for panels painted with samples B and C is 1.02. These differences are over twice the initial differences in lightness measured prior to exposure to UV light. Thus, the panel painted with sample C was not as susceptible to UV light stimulated degradation as the panels painted with samples A and B. Thus, the inventive composition containing elevated concentrations of titanium dioxide as described herein affords better UV light protection as compared to compositions containing standard pigmentary titanium dioxide.

## Claims

1. A composition imparting UV protective capability, the composition comprising:
a coated particulate material having a substantially rutile crystal habit and an average particle size greater than or equal to 0.5 µm, and
a medium, wherein the medium is a component or combination of components within which the coated particulate material can be dispersed,
wherein the particulate material is dispersed in the medium at a concentration that is within a range of from 1% by volume to 40% by volume, based on the total volume of composition,
wherein the particulate material is selected from titanium dioxide, doped titanium dioxide and a mixture thereof, and
wherein the particulate material is coated with one or more inorganic pigment coating that may be used to impart effects.

2. The composition of claim 1, wherein the particulate material is coated with one or more inorganic pigment coating that imparts an effect selected from: dispersibility, photocatalytic inertness, colour stability and photostability.

3. The composition of claim 1 or claim 2, wherein the particulate material having the coating exhibits increased UV light protective capability, reduced photocatalytic activity and improved dispersibility as compared to conventional pigmentary crystal size titanium dioxide.

4. The composition of any one of claims 1 to 3, wherein the particulate material is coated with one or more inorganic pigment coating selected from: silica, dense amorphous silica, zirconia, aluminium phosphate, titania, tin, antimony, manganese and cerium.

5. The composition of any one of claims 1 to 4, wherein the particulate material has a dense silica coating, an alumina coating, a zirconia coating or a combination thereof.

6. The composition of any one of claims 1 to 5, wherein the ratio of the average particle size to average crystal size for the particulate material is < 1.4.

7. The composition of claim any one of claims 1 to 6, wherein the particulate material is titanium dioxide.

8. The composition of claim 7 wherein the particulate material is coated with a dense silica coating.

9. The composition of claim 8 wherein the amount of dense silica coating is greater than or equal to about 0.2% by weight and less,than or equal to about 7% by weight, relative to the total weight of titanium dioxide.

10. The composition of any of the preceding claims further including a coloured pigment.

11. The composition of any of the preceding claims wherein the medium is a resin, carrier, binder or a mixture thereof.

12. Use of the composition of any of the preceding claims in a paint, ink, varnish or coating or as a composition from which an article can be formed.

13. A method of attenuating the effects of UV light on a substrate exposed to solar radiation comprising applying the composition of claim 1, or any of claims 2 to 11, to a surface of the substrate.

14. A substrate coated with, or formed by, a composition, wherein said composition is a composition imparting UV protective capability as defined in any one of claims 1 to 11.

15. Use of the composition of any of claims 1 to 11 to attenuate the effects of UV light on a substrate exposed to solar radiation.

## Patentansprüche

1. Zusammensetzung, welche eine UV-Schutzfunktion verleiht, wobei die Zusammensetzung Folgendes umfasst:
ein beschichtetes Partikelmaterial mit einer im Wesentlichen rutilkristallinen Wuchsform und einer durchschnittlichen Partikelgröße größer als oder gleich 0,5 µm, und
ein Medium, worin das Medium eine Komponente oder eine Kombination aus Komponenten ist, innerhalb derer sich das beschichtete Partikelmaterial dispergieren lässt,
worin das Partikelmaterial in einer Konzentration in das Medium dispergiert wird, welche sich je nach Gesamtvolumen der Zusammensetzung in einem Bereich zwischen 1 Vol.-% und 40 Vol.-% befindet,
worin das Partikelmaterial ausgewählt ist aus Titanoxid, dotiertem Titandioxid und einer Mischung davon, und
worin das Partikelmaterial mit einer oder mehreren anorganischen Pigmentbeschichtung(en) beschichtet ist, welche zur Verleihung von Wirkungen verwendet werden kann bzw. können.

2. Zusammensetzung nach Anspruch 1, worin das Partikelmaterial mit einer oder mehreren anorganischen Pigmentbeschichtung(en) beschichtet ist, welche eine Wirkung verleihen, die ausgewählt ist aus: Dispergierbarkeit, photokatalytische Inaktivität, Farb- sowie Photobeständigkeit.

3. Zusammensetzung nach Anspruch 1 oder Anspruch 2, worin das Partikelmaterial mit der Beschichtung im Vergleich mit herkömmlichem pigmentären Titandioxid in Kristallgröße eine vermehrte UV-Licht-Schutzfunktion, eine verminderte photokatalytische Aktivität und eine verbesserte Dispergierbarkeit zeigt.

4. Zusammensetzung nach irgendeinem der Ansprüche 1 bis 3, worin das Partikelmaterial mit einer oder mehreren anorganischen Pigmentbeschichtung(en) beschichtet ist, ausgewählt aus: Siliziumdioxid, dichtem amorphen Siliziumdioxid, Zirkoniumdioxid, Aluminiumphosphat, Titandioxid, Zinn, Antimon, Mangan und Cer.

5. Zusammensetzung nach einem der Ansprüche 1 bis 4, worin das Partikelmaterial über eine dichte Siliziumdioxidbeschichtung, eine Aluminiumbeschichtung, eine Zirkoniumdioxidbeschichtung oder eine Kombination davon verfügt.

6. Zusammensetzung nach irgendeinem der Ansprüche 1 bis 5, worin das Verhältnis der durchschnittlichen Partikelgröße zur durchschnittlichen Kristallgröße für das Partikelmaterial < 1,4 ist.

7. Zusammensetzung nach irgendeinem der Ansprüche 1 bis 6, worin das Partikelmaterial Titandioxid ist.

8. Zusammensetzung nach Anspruch 7, worin das Partikelmaterial mit einer dichten Siliziumdioxidbeschichtung beschichtet ist.

9. Zusammensetzung nach Anspruch 8, worin die Menge der dichten Siliziumdioxidbeschichtung größer als oder gleich ca. 0,2 Gew.-% und kleiner als oder gleich ca. 7 Gew.-% in Relation zum Gesamtgewicht von Titandioxid ist.

10. Zusammensetzung nach irgendwelchen der vorstehenden Ansprüche, welche des Weiteren ein gefärbtes Pigment beinhaltet.

11. Zusammensetzung nach irgendwelchen der vorstehenden Ansprüche, worin das Medium ein Harz, Träger, Bindemittel oder eine Mischung davon ist.

12. Verwendung der Zusammensetzung nach irgendwelchen der vorstehenden Ansprüche in einem Lack, einer Farbe, einer Lackierung oder einer Beschichtung oder als Zusammensetzung, aus welcher sich ein Artikel bilden lässt.

13. Verfahren zur Abschwächung der Auswirkungen von UV-Licht auf ein Substrat, welches der Sonneneinstrahlung ausgesetzt ist, umfassend die Auftragung der Zusammensetzung nach Anspruch 1 oder irgendeinem der Ansprüche 2 bis 11, auf eine Oberfläche des Substrats.

14. Substrat, beschichtet mit oder gebildet aus einer Zusammensetzung, worin es sich bei der Zusammensetzung um eine Zusammensetzung handelt, welche eine UV-Schutzfunktion gemäß der Definition in irgendeinem der Ansprüche 1 bis 11 verleiht.

15. Verwendung der Zusammensetzung nach irgendwelchen der Ansprüche 1 bis 11 zur Abschwächung der Auswirkungen von UV-Licht auf ein Substrat, welches der Sonneneinstrahlung ausgesetzt ist.

## Revendications

1. Une composition conférant une capacité de protection UV, la composition comportant :
un matériau particulaire enduit ayant un habitus cristallin essentiellement de rutile et une taille moyenne de particules supérieure ou égale à 0,5 µm, et
un milieu, dans laquelle le milieu est un composant ou une combinaison de composants à l'intérieur duquel le matériau particulaire enduit peut être dispersé,
dans laquelle le matériau particulaire est dispersé dans le milieu à une concentration se trouvant dans la plage allant de 1 % en volume à 40 % en volume, basé sur le volume total de la composition,
dans laquelle le matériau particulaire est sélectionné parmi le dioxyde de titane, le dioxyde de titane dopé et un mélange de ceux-ci, et
dans laquelle le matériau particulaire est enduit d'une ou plusieurs couches de pigments inorganiques qui peuvent être utilisés pour conférer des effets.

2. La composition de la revendication 1, dans laquelle le matériau particulaire est enduit d'une ou plusieurs couches de pigments inorganiques qui confèrent un effet sélectionné parmi : la dispersabilité, l'inertie photocatalytique, la stabilité des couleurs et la photostabilité.

3. La composition de la revendication 1 ou 2, dans laquelle le matériau particulaire enduit présente une augmentation de la capacité de protection contre la lumière UV, une réduction de l'activité photocatalytique et une amélioration de la dispersabilité comparé au dioxyde de titane de taille de cristal pigmentaire conventionnelle.

4. La composition de n'importe laquelle des revendications 1 à 3, dans laquelle le matériau particulaire est enduit d'une ou plusieurs couches de pigments inorganiques sélectionnés parmi : la silice, la silice amorphe dense, la zircone, le phosphate d'aluminium, le dioxyde de titane, l'étain, l'antimoine, le manganèse et le cérium.

5. La composition de n'importe laquelle des revendications 1 à 4, dans laquelle le matériau particulaire comporte une couche de silice dense, une couche d'alumine, une couche de zircone ou une combinaison de celles-ci.

6. La composition de n'importe laquelle des revendications 1 à 5, dans laquelle le rapport de la taille de particule moyenne à la taille de cristal moyenne du matériau particulaire est < 1,4.

7. La composition de n'importe laquelle des revendications 1 à 6, dans laquelle le matériau particulaire est le dioxyde de titane.

8. La composition de la revendication 7 dans laquelle le matériau particulaire est enduit d'une couche de silice dense.

9. La composition de la revendication 8 dans laquelle la quantité de couche de silice dense est supérieure ou égale à environ 0,2 % en poids et inférieure ou égale à environ 7 % en poids, par rapport au poids total de dioxyde de titane.

10. La composition de n'importe laquelle des revendications précédentes comportant de plus un pigment coloré.

11. La composition de n'importe laquelle des revendications précédentes dans laquelle le milieu est une résine, un support, un liant ou un mélange de ceux-ci.

12. Utilisation de la composition de n'importe laquelle des revendications précédentes dans de la peinture, de l'encre, du vernis ou un revêtement ou comme une composition à partir de laquelle un article peut être formé.

13. Une méthode d'atténuation des effets de la lumière UV sur un substrat exposé au rayonnement solaire comportant l'application de la composition de la revendication 1, ou de n'importe laquelle des revendications 2 à 11, à une surface du substrat.

14. Un substrat enduit de, ou formé par, une composition, dans lequel ladite composition est une composition conférant une capacité de protection UV tel que défini dans n'importe laquelle des revendications 1 à 11.

15. Utilisation de la composition de n'importe laquelle des revendications 1 à 11 pour atténuer les effets de la lumière UV sur un substrat exposé au rayonnement solaire.
